# EUROPEAN PATENT SPECIFICATION

(11) **EP 1 215 053 B1**
(45) Date of publication and mention of the grant of the patent: **31.08.2005**
(21) Application number: 01128612.7
(22) Date of filing: 30.11.2001
(51) Int. Cl.: B60B 33/00

(54) **Easily assembled castor wheel for chairs, armchairs and the like**
Einfach zusammensetzbare Lenkrolle für Stühle, Sessel und dergleichen
Roulette d'assemblage facile pour chaises, fauteuils et semblables

(30) Priority: 12.12.2000 IT MI20000695 U
(43) Date of publication of application: 19.06.2002
(73) Proprietor: O.G.T.M. Officine Meccaniche S.r.l., 26866 S. Angelo Lodigiano (Lodi) (IT)
(72) Inventor: Trivini, Ruggero, 26866 S. Angelo Lodigiano (Lodi) (IT)
(74) Representative: Cicogna, Franco

(56) References cited:
- EP-A- 0 054 797
- EP-A- 0 650 854
- EP-A- 0 800 934
- US-A- 4 706 329
- US-A- 4 722 115

## Description

### BACKGROUND OF THE INVENTION

The present invention relates to an easily assembled castor wheel, specifically designed for chairs, armchairs and the like.

As is known, conventional castor wheels used for chairs, armchairs or the like, comprise a supporting body defining a seat for housing herein a vertical pivot pin for coupling to a chair body or the like.

A castor wheel according to the preamble of claim 1 is known from EP-A-0 054 797.

The supporting body comprises a horizontally extending pin, on which are coupled a pair of wheel members, arranged in an adjoining opposite relationship.

Each wheel element comprises a central body, having a hub for providing a forced connection to a horizontal shaft and including a peripheral edging defining the rolling surface of the wheel.

In conventional castor wheels, said wheels, as made, have a given color, which cannot be modified after the construction of the wheels.

This requires the provision of a large storing space for storing different colored castor wheels, which are required by the user for fitting a lot of different colors chairs on which said wheels must be assembled.

### SUMMARY OF THE INVENTION

Accordingly, the aim of the present invention is to provide an easily assembled castor wheel, specifically designed for chairs, armchairs and the like, allowing to modify the color of the front portion of the wheel, and which, due to its specifically designed constructional features, is very reliable and safe in operation.

Within the scope of the above mentioned aim, an object of the present invention is to provide such a castor wheel allowing a user to define the color of the front portion of the wheel, without using assembling tools, for assembling the components of the castor wheel.

Yet another object of the present invention is to provide such a castor wheel which is very competitive from a mere economic standpoint.

According to the present invention, the above mentioned aim and objects, as well as yet other objects, which will become more apparent hereinafter, are achieved by the castor wheel as defined in claim 1.

### BRIEF DESCRIPTION OF THE DRAWINGS

Further characteristics and advantages of the present invention will become more apparent hereinafter from the following detailed disclosure of an easily assembled castor wheel, specifically designed for chairs, armchairs and the like, and being shown, by way of an indicative, but not limitative, example, in the accompanying drawings, where:

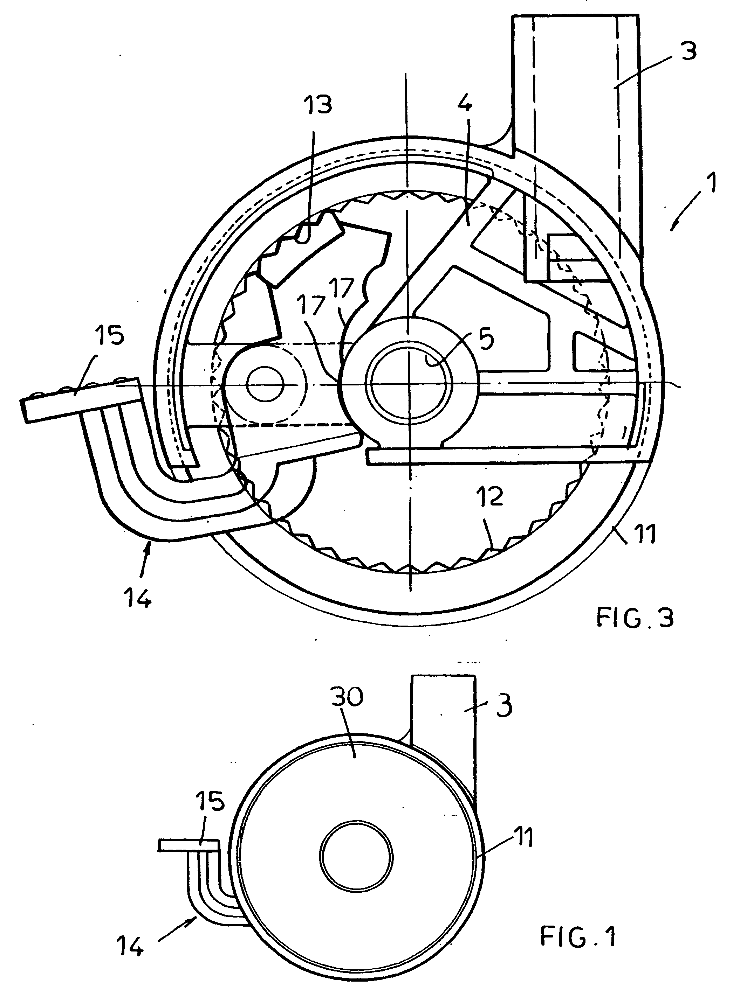

Figure 1 is a side view of the castor wheel according to the present invention;

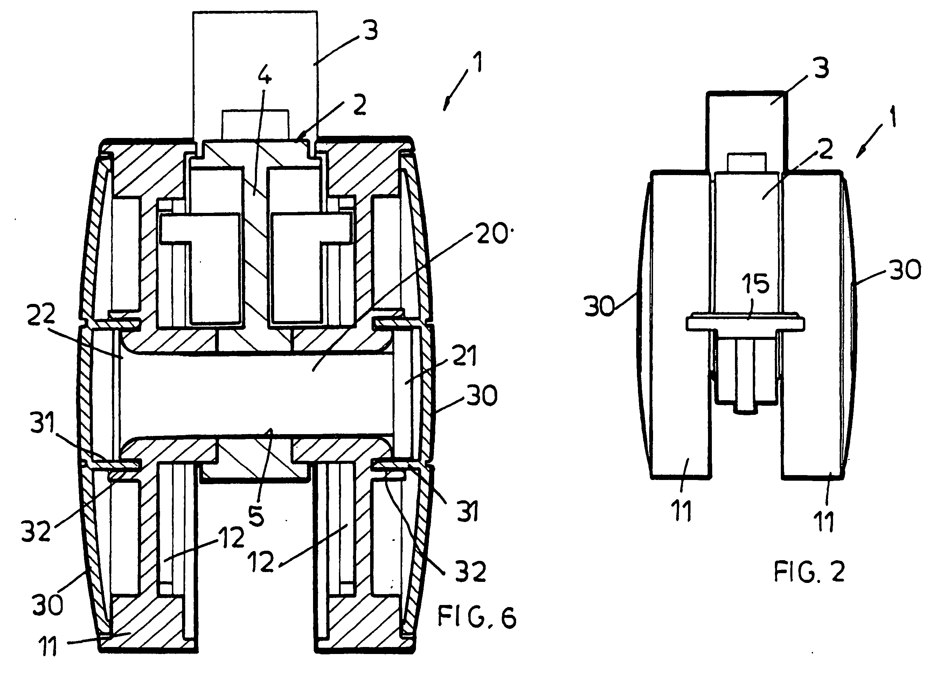

Figure 2 is a front view of the castor wheel according to the invention;
Figure 3 shows the castor wheel according to the invention in a locked condition thereof;
Figure 4 shows the castor wheel according to the invention in an unlocked condition thereof;

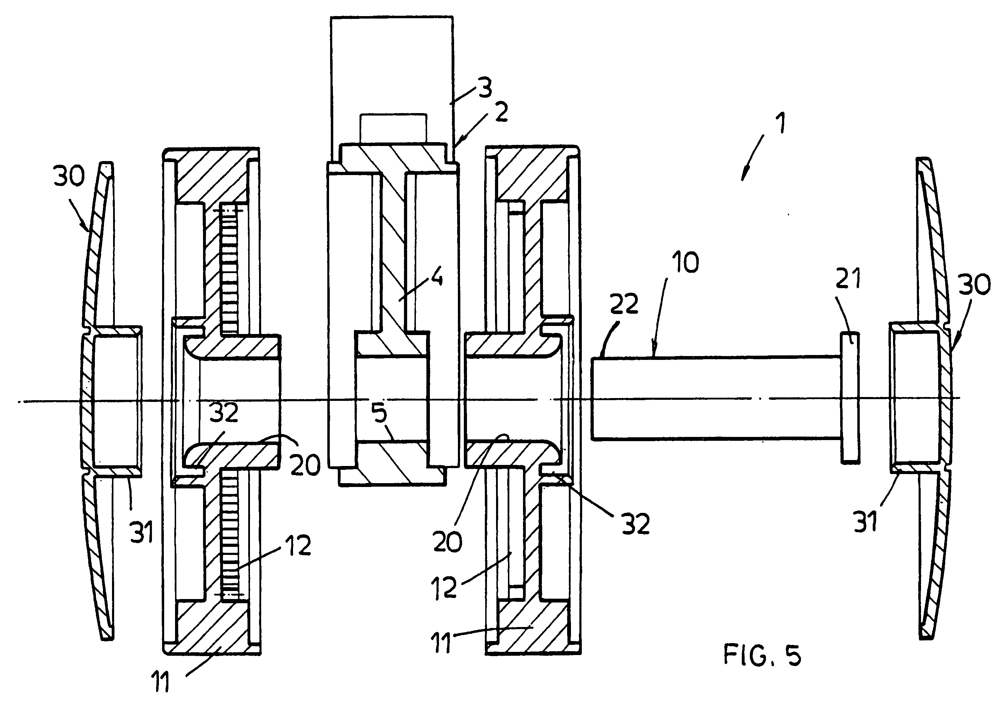

Figure 5 is an exploded cross-sectional view illustrating the castor wheel according to the invention; and
Figure 6 illustrates a cross-sectional view of the castor wheel in an assembled condition thereof.

### DESCRIPTION OF THE PREFERRED EMBODIMENTS

With reference to the number references of the above mentioned figures, the easily assembled castor wheel, specifically designed for chairs, armchairs and the like, which has been generally indicated by the reference number 1, comprises a supporting body 2, defining a seat 3 in which is housed a vertical coupling pin for coupling said castor wheel to a chair or the like.

The supporting body 2 defines a central portion 4, in which is made a horizontal hole 5 for supporting a pin 10, which will be disclosed in a more detailed manner hereinafter, and which constitutes the rotary axis for a pair of wheel elements 11, which are arranged in an adjoining opposite relationship with respect to the central portion.

The wheel elements 11 comprise an inner gear ring 12, therewith engages the tooth pattern 13 of a locking element 14 swingably mounted on the body 2 and including an outward accessible pedal portion 15.

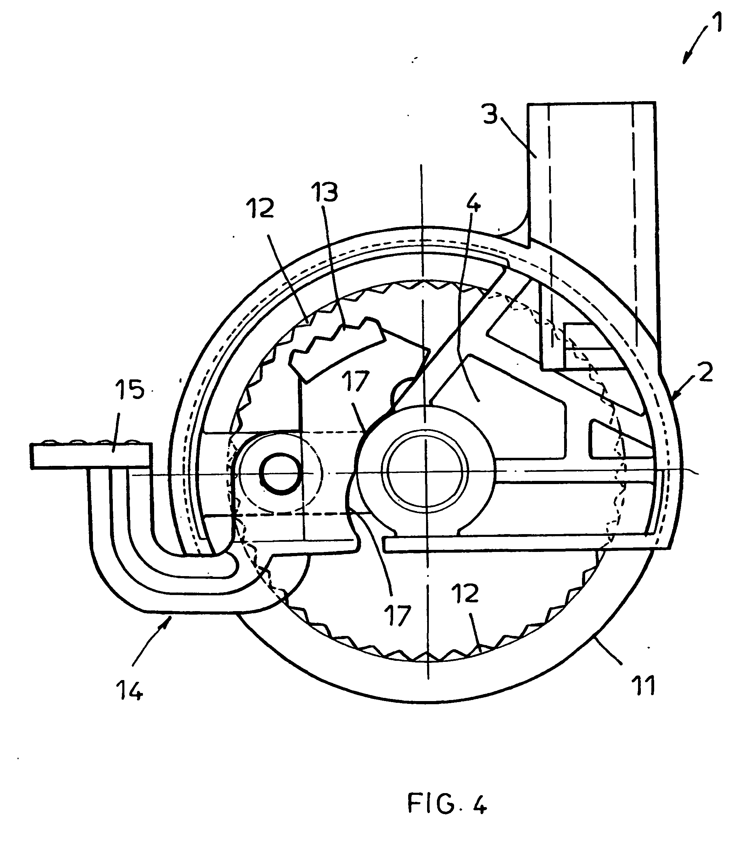

Said locking element 14 allows to arrange the locking tooth pattern 13 at an engagement position, as is clearly shown in figure 3, and at a disengagement position, as is clearly shown in figure 4.

To that end, recesses 17 for arranging the locking element 14 at a pair of stable positions are herein provided.

The main feature of the present invention is that the pin 10 is engaged in bush seats 20 defined on the wheel elements, which are axially restrained since the pin 10 comprises, at one end portion thereof, an enlarged pin head 21 axially engaging with a bush and, at the other end portion thereof, with an upsettable portion 22, engaging with an axial end portion of the bush of the other wheel element 11.

With the above arrangement, it is possible to assemble the wheel elements 11 to the supporting body 2.

The outer finishing of the wheel elements is performed by front covering elements 30, axially engaging with the outer faces of the wheel elements 11, and being provided with a cylindric end piece 31 engaging in an annular groove 32 defined at the end portions of the bush.

Thus, it is possible to apply to the castor wheel, upon assembling it, a front covering.

Said front covering can be mounted and changed, depending on aesthetic requirements of the user, without using specifically designed application tools.

Thus, the above disclosed arrangement allows to hold in a store assembled castor wheels with a possibility of applying the finishing element, comprising the mentioned front covering, having the required color, depending on the contingent requirements.

From the above disclosure it should be apparent that the invention fully achieves the intended aim and objects.

In particular, it should be apparent that the specifically designed adopted construction, in which the wheel elements are coupled to the supporting body by an upsettable pin, allows to complete the assembling of the castor wheel at a delayed time, without using assembling tools.

In practicing the invention, the used materials, provided that they are compatible to the intended application, as well as the contingent size and shapes, can be any, depending on requirements.

## Claims

1. An easily assembled castor wheel (1), for chairs or armchairs, said castor wheel comprising a central supporting body (2) defining a top seat (3) for housing a vertical pin for coupling said castor wheel (1) to a chair, said central supporting body (2) defining a central portion (4) having a central hole (5) receiving a supporting pin (10) for rotatably supporting a pair of adjoining wheel elements (11) arranged on both sides of said central supporting body (2) and removably covered by removable pressure engageable front covering elements (30), **characterized in that** said supporting pin (10) constitutes the rotary axis on which said wheel elements (11) rotate, comprising, at one end portion thereof, an enlarged preformed pin head (21) and, at another end portion thereof, an upsettable portion (22), said pin head (21) and upsettable portion (22) each engaging with the respective outer axial end portion of bush elements (20) defined by said wheel elements (11) such that, in an assembled condition of said castor wheel (1), the inner axial end portion of each bush element (20) abuts against a respective flat outer surface of said central portion (4) of said central supporting body (2).

2. A castor wheel (1), according to Claim 1, **characterized in that** each said front covering element (30) comprises a cylindrical axial end piece (31) which can be pressure engaged in an annular groove defined by said respective castor wheel element (11) at an axial end of its bush element (20).

3. A castor wheel (1), according to Claim 1, **characterized in that** said wheel elements (11) comprise an inner tooth pattern (12) which can be engaged with a locking tooth pattern (13) of a pedal element (15) swingably mounted on said supporting body (2).

## Patentansprüche

1. Einfach zusammensetzbare Lenkrolle (1) für Stühle oder Sessel, wobei die Lenkrolle einen zentralen Tragekörper (2) umfasst, welcher einen oberen Sitz (3) zur Aufnahme eines vertikalen Stifts zum Kuppeln der Lenkrolle (1) mit einem Stuhl definiert, wobei der zentrale Tragekörper (2) einen zentralen Abschnitt (4) definiert, welcher ein zentrales Loch (5) aufweist, welches einen Tragestift (10) zum drehbaren Tragen eines Paars von angefügten Radelementen (11) aufnimmt, die an beiden Seiten des zentralen Tragekörpers (2) angeordnet und abnehmbar durch abnehmbare, mit Druck in Eingriff gebrachte vordere Abdeckelemente (30) abgedeckt sind, **dadurch gekennzeichnet, dass** der Tragestift (10) die Drehachse fortsetzt, auf welcher sich die Radelemente (11) drehen, umfassend an einem seiner Endabschnitte einen vergrößerten, vorgeformten Stiftkopf (21) und am anderen Endabschnitt einen anstauchbaren Abschnitt (22), wobei der Stiftkopf (21) und der anstauchbare Abschnitt (22) jeweils mit dem jeweiligen äußeren axialen Endabschnitt der Hülsenelemente (20), die durch die Radelemente (11) definiert werden, in Eingriff stehen, so dass in einem zusammengesetzten Zustand der Lenkrolle (1) der innere axiale Endabschnitt jedes Hülsenelements (20) gegen eine entsprechende flache äußere Oberfläche des zentralen Abschnitts (4) des zentralen Tragekörpers (2) stößt.

2. Lenkrolle (1) gemäß Anspruch 1, **dadurch gekennzeichnet, dass** jedes vordere Abdeckelement (30) ein zylindrisches axiales Endstück (31) umfasst, welches durch Druck in einer ringförmigen Nut eingreift, welche durch das jeweilige Lenkrollenelement (11) an einem axialen Ende seines Hülsenelements (20) definiert ist.

3. Lenkrolle (1) gemäß Anspruch 1, **dadurch gekennzeichnet, dass** die Radelemente (11) ein innenliegendes Zahnmuster (12) umfassen, welches mit einem Verriegelungszahnmuster (13) eines Pedalelements (15), welches schwenkbar auf dem Tragekörper (2) angebracht ist, in Eingriff gebracht werden kann.

## Revendications

1. Roue pivotante (1) facilement assemblée, pour chaises et fauteuils, ladite roue pivotante comprenant un corps central de support (2) définissant un logement supérieur (3) pour loger une broche verticale afin de coupler ladite roue pivotante (1) à une chaise, ledit corps central de support (2) définissant une partie centrale (4) présentant un orifice central (5) recevant une broche de support (10) afin de supporter de manière rotative une paire d'éléments, de type roue, avoisinants (11), disposée de part-et-d'autre dudit corps central de support (2) et recouverte de manière amovible, par des éléments de recouvrement avant (30) engageables par pression, **caractérisée en ce que** ladite broche de support (10) constitue l'axe de rotation sur lequel lesdits éléments de type roue (11) tournent, et comprenant, au niveau d'une partie d'extrémité de celle-ci, une tête de broche (21) préformée élargie et, au niveau d'une autre extrémité de celle-ci, une partie de renversement (22), ladite tête de broche (21) et ladite partie de renversement (22) s'engageant chacune dans la partie d'extrémité axiale externe respective de l'élément de type douille (20) défini par lesdits éléments de type roue (11), de telle manière, que dans une condition assemblée de ladite roue pivotante (1), la partie d'extrémité axiale interne de chaque élément de type douille (20) est en contact avec une surface externe plate respective dudit élément central (4) dudit corps central de support (2).

2. Roue pivotante (1), selon la revendication 1, **caractérisée en ce que** chacun desdits éléments de recouvrement avant (30), comprend un pièce terminale d'extrémité axiale cylindrique (31) qui peut être engagée par pression dans une rainure annulaire définie par ledit élément respectif de type roue pivotante (11) au niveau d'une extrémité axiale de son élément de type douille (20).

3. Roue pivotante (1), selon la revendication 1, **caractérisée en ce que** lesdits éléments de type roue (11) comprennent une structure interne crantée (12) qui peut être engagée dans une structure crantée de blocage (13) d'un élément de type pédale (15) monté de manière basculante sur ledit corps de support (2).
